# EUROPÄISCHE PATENTSCHRIFT

(11) **EP 2 138 050 B1**
(45) Veröffentlichungstag und Bekanntmachung des Hinweises auf die Patenterteilung: **15.08.2012**
(21) Anmeldenummer: 09008250.4
(22) Anmeldetag: 24.06.2009
(51) Int. Cl.: A23G 3/44, A23L 1/0522, A23L 1/09, A23L 1/24, A23L 2/60, A23G 3/48, A23G 3/42

(54) **Verflüssigte Hülsenfrucht-Stärke**
Liquefied legume starch
Amidon de légumineuse liquéfié

(30) Priorität: 26.06.2008 DE 102008030439
(43) Veröffentlichungstag der Anmeldung: 30.12.2009
(73) Patentinhaber: Emsland-Stärke GmbH, 49824 Emlichheim (DE)
(72) Erfinder: Herrman, Martina, 49824 Emlichheim (DE)
(74) Vertreter: Scholz, Volker

(56) Entgegenhaltungen:
- EP-A- 1 645 196
- WO-A-01/52670
- WO-A-2005/100407
- WO-A-2007/041732
- WO-A-2007/063084
- AU-A1- 2005 203 317
- US-A1- 2004 258 831
- SEGURA-CAMPOS ET AL.: "Synthesis and partial characterization of octenylsuccinic starch from Phaseolus lunatus" FOOD HYDROCOLLOIDS, Bd. 22, Nr. 8, 6. Oktober 2007 (2007-10-06), Seiten 1467-1474, XP002548047 & [Online] Gefunden im Internet: URL:http://www.sciencedirect.com/science?_ ob=ArticleURL&_udi=B6VP9-4PV2S3K-2&_user=9 87766&_rdoc=1&_fmt=&_orig=search&_sort=d&_ docanchor=&view=c&_acct=C000049880&_versio n=1&_urlVersion=0&_userid=987766&md5=a4bfe 438dcf11cf5c96ea29688805319> [gefunden am 2009-09-30]
- BETANCUR-ANCONA, D., ET AL.: "Chemical Modification of Jack Bean (Canavalia ensiformis) starch by succinylation" STARCH/STÄRKE, Bd. 54, 2002, Seiten 540-546, XP002548194
- THIRATHUMTHAVORN D ET AL: "Thermal and pasting properties of native and acid-treated starches derivatized by 1-octenyl succinic anhydride" CARBOHYDRATE POLYMERS, APPLIED SCIENCE PUBLISHERS, LTD. BARKING, GB, Bd. 66, Nr. 2, 27. Oktober 2006 (2006-10-27), Seiten 258-265, XP025087704 ISSN: 0144-8617 [gefunden am 2006-10-27]

## Beschreibung

Die vorliegende Erfindung betrifft eine Mischung aus einer mit n-Octenylsuccinatanhydrid behandelten Hülsenfrucht-Stärke und zumindest einer modifizierten Stärke anderen Ursprungs.

Aus dem Stand der Technik ist beispielsweise eine auf Stärke basierte, gelatinisierte Süßigkeit aus der EP 1645196 B1 bekannt, die eine verflüssigte und stabilisierte Hülsenfrucht-Stärke mit einem Gehalt an Amylose von 25 bis 40 % und ein oder mehrere Süßungsmittel enthält.

Bei der Herstellung einer solchen Süßigkeit kann jedoch noch die Gelierfähigkeit bzw. die Emulgierfähigkeit verbessert werden.

Ferner sind Textur und Mundgefühl von unter Einsatz entsprechender Stärken aus dem Stand der Technik hergestellter Lebensmittel, insbesondere Süßigkeiten, Feinkost oder Getränke, noch verbesserungsfähig.

Es ist somit eine Aufgabe der vorliegenden Erfindung, die Nachteile aus dem Stand der Technik zu überwinden und insbesondere Mischungen von Stärken bereitzustellen, die bei Einsatz in Süßigkeiten, Feinkost oder in der Getränkeindustrie zu einer verbesserten Textur und einem vollerem Mundgefühl des damit hergestellten Produkts, sowie zu einer verbesserten Gelierfähigkeit und Emulgierfähigkeit. Aus M. Segura-Campos et al., "Synthesis and partial characterization of octenylsuccinic starch from Phaseolus lunatus", Food Hydrocolloids 22 (2008) 1467-1474, ist mit n-Octenylsuccinatanhydrid behandelte Stärke von Phaseolus lunatus bekannt, welche zur Herstellung von Feinkost und Getränken eingesetzt wird. WO 2007/041732 A2 beschreibt die kombinierte Verwendung von Stärke(n) bzw. Stärkederivaten zusammen mit mindestens einer hochviskosen Cellulose als Verdicker in Dispersionsbindemittel basierenden Farbsystemen, wobei die Stärke Erbsenstärke sein kann, die vorzugsweise octenylsuccinyliert ist. Aus EP 1 645 196 A1 ist eine gelatinisierte Süßigkeit bekannt, welche Erbsenstärke und Sü-βungsmittel umfasst. Aus WO 01/52670 A1 ist ein Lebensmittelprodukt bekannt, wie beispielsweise Creme Caramel oder Cioccolato Dessert, das aus Erbsenmehl hergestellt wird. Das Erbsenmehl ist dabei zumindest teilweise gelatinisiert, wobei auch die Zugabe von Süßungsmitteln vorgesehen ist. D. Betancur-Ancona et al., "Chemical Modification of Jack Bean (Canavalia ensiformis) starch by succinylation", Starch/Stärke 54 (2002) 540-546, offenbart chemische Eigenschaften von Jackbohnenstärke, welche mit Succinatanhydrid modifiziert wurde. Schließlich offenbart die US 2004/0258831 A1 ein Verdickungsmittel zur Herstellung von Lebensmitteln, wie z.B. Desserts, Getränken, Suppen oder Soßen, welches eine Kombination von zwei oder mehreren mit n-Octenylsuccinatanhydrid behandelten und gelatinisierten Stärken umfassen kann, wobei es sich um Erbsen- und Kartoffel- oder Tapiokastärke handeln kann.

Diese Aufgabe wird erfindungsgemäß gelöst durch eine Mischung aus zumindest einer mit n-Octenylsuccinatanhydrid behandelten Hülsenfrucht-Stärke und zumindest einer modifizierten Stärke anderen Ursprungs, wobei in der Mischung die mit n-Octenylsuccinatanhydrid behandelte Hülsenfrucht-Stärke und die modifizierte Stärke anderen Ursprungs in einem Mischungsverhältnis von 70:30 bis 30:70 Gewichtsprozent (auf Basis der gesamten Mischung) vorliegen.

Dabei ist besonders bevorzugt, dass die Hülsenfrucht-Stärke eine verflüssigte Stärke ist.

Ferner ist bevorzugt, dass die Hülsenfrucht-Stärke eine Erbsenstärke ist und/oder die modifizierte Stärke anderen Ursprungs eine verflüssigte und/oder stabilisierte Stärke ist.

Erfindungsgemäß besonders bevorzugt werden Kochstärken, vorverkleisterte Stärken oder Mischungen der Stärken eingesetzt.

Auch wird vorgeschlagen, dass die Stärke anderen Ursprungs Kartoffelstärke und/oder Tapiokastärke umfasst.

Zumindest eine der Stärken kann getrocknet, sprühgekocht und/oder vorverkleistert sein und/oder zumindest eine der Stärken kann über Sprühtrocknung hergestellt worden sein.

Bevorzugt ist, dass zumindest eine der Stärken dextriniert ist.

Die erfindungsgemäße Mischung kann zur Herstellung von Feinkost, Süßwaren oder in der Getränkeindustrie verwendet werden.

Erfindungsgemäß ist auch eine gelatinisierte Süßigkeit, wobei sie eine eine Mischung wie oben beschrieben und ein oder mehrere Süßungsmittel enthält.

Erfindungsgemäß ist schließlich eine Feinkost oder ein Getränk, die bzw. das eine verflüssigte Mischung wie oben beschrieben enthält.

Überraschend wurde gefunden, dass die vorgeschlagene Mischung aus einer solchen Stärke mit einer modifizierten Stärke anderen Ursprungs die Emulgierfähigkeit und Gelierfähigkeit des damit hergestellten Produkts deutlich verbessern kann. Auch wurde festgestellt, dass beispielsweise bei der Herstellung von Feinkost, wie Salatcremes oder Mayonnaisen, eine verbesserte Textur und ein volleres Mundgefüht der hergestellten Produkte erreicht werden kann. Besonders bevorzugt kann die Stärke die Mischung zur Herstellung von Gummi- und Geleeartikeln, Lakritz und Dragees oder Kaubonbons sowie zur Herstellung von Feinkost oder zur Herstellung von Getränken eingesetzt werden. Das Mischungsverhältnis liegt bevorzugt bei 70:30 bis 30:70 für die Mischung aus mit OSA behandelter Hülsenfrucht-Stärke und modifizierter Stärke anderen Ursprungs.

Ebenfalls kann vorgesehen sein, dass die Hülsenfrucht-Stärke zur Herstellung von Käse und Filmkapseln, beispielsweise als Verkapselungsmittel für Vitamine und Aromen, eingesetzt wird.

Wird für die eine verflüssigte und mit OSA behandelte Hülsenfiucht-Stärke beispielsweise Erbsenstärke eingesetzt, soll die Stärke anderen Ursprungs dann auch eine andere Hülsenfrucht-Stärke als Erbsenstärke umfassen können.

Im Rahmen der vorliegenden Erfindung ist eine verflüssigte Hülsenfruchtstärke eine verflüssigte, bevorzugt jedoch nicht stabilisierte Stärke.

Weitere vorteilhafte Eigenschaften und Merkmale der Erfindung ergeben sich aus der folgenden detaillierten Beschreibung bevorzugter Ausführungsformen, ohne jedoch den Schutzumfang in irgendeiner Weise einschränken zu wollen.

Eine vorteilhafte Rezeptur zur Herstellung einer Süßigkeit, wobei in der Anmeldung alle Prozentangaben Gewichtsprozentangaben sind, ist wie folgt:
5-30 % verflüssigte und mit OSA behandelte Erbsenstärke
5-30 % verflüssigte und/oder stabilisierte Stärke anderen Ursprungs
10-40 % Glukosesirup (42 DE)
10-40 % Zucker
10-20 % Wasser.

Zur Herstellung der erfindungsgemäßen Süßigkeit werden die Komponenten bei einer Temperatur von etwa 60°C miteinander vermischt. Die erhaltene Zusammenmischung wird dann bei einer Temperatur von etwa 130°C und bei einem Druck von etwa 2,5 bar gekocht. Anschließend wird die Zusammenmischung bei einer Temperatur von etwa 80°C in vorbereitete Formen gegossen, mit einer Konzentration der Lösung von 70-74°Bx. In den Formen kann die Zusammenmischung bei einer Temperatur von 20-70°C für eine Dauer von 20-30 Stunden trocknen. Nach der Trocknung können die Süßigkeiten aus den Formen entnommen und, sofern gewünscht, verpackt werden.

Bei der Herstellung einer Süßigkeit auf Basis der oben angegebenen Rezeptur wird überraschend festgestellt, dass diese äußerst schnell geliert und die eingesetzten Stärken sehr schnell emulgiert werden können.

Eine nicht erfindungsgemäße Rezeptur zur Herstellung einer Salatcreme ist wie folgt:

| | |
|---|---|
| Öl | 15,0% |
| Zucker | 2,0% |
| Salz | 1,2% |
| Senf | 0,6% |
| Essig | 0,7% |
| verflüssigte und stabilisierte Kartoffelstärke | 6,0% |
| Hydrokolloide | 0,05% |
| mit n-Octenylsuccinatanhydrid behandelte verflüssigte Erbsenstärke | 0,3% |
| Wasser | bis 100% |

Das Wasser wird in einem Homogenisator vorgelegt und die gemischten Trockenstoffe hinzugegeben und dispergiert. Anschließend wird das Öl zugegeben und emulgiert.

Eine Rezeptur zur Herstellung einer Mayonnaise ist wie folgt:

| | |
|---|---|
| Pflanzliches Öl | 51,2% |
| Wasser | 26,88% |
| mit n-Octenylsuccinatanhydrid behandelte, verflüssigte Erbsenstärke | 1,2% |
| Salz | 1,4% |
| Zucker | 12,9% |
| verflüssigte und stabilisierte Kartoffelstärke | 2,6% |
| Wein-Branntweinessig 5% | 3,5% |
| Zitronensäure | 0,3% |
| Apfelsäure | 0,02% |

Zur Herstellung wird das Wasser in einem Homogenisator vorgelegt und die vermischten Trockenstoffe hinzugegeben und dispergiert. Anschließend wird das Öl hineingegeben und emulgiert. Der Wein-Branntweinessig (5%), die Zitronensäure und die Apfelsäure einziehen lassen und dann nachemulgieren.

Durch die mit n-Octenylsuccinatanhydrid behandelte Hülsenfrucht-Stärke erhält man in der Salatcreme und in der Mayonnaise eine verbesserte Textur und ein volleres Mundgefühl.

Eine nicht erfindungsgemäße Rezeptur zur Herstellung einer Fruchtemulsion für die Getränke-Herstellung ist wie folgt:

| | |
|---|---|
| mit n-Octenylsuccinatanhydrid behandelte, verflüssigte Erbsenstärke | 11,1% |
| Frucht-Öl | 10,6% |
| Zitronensäure | 0,2% |
| Konservierungsstoffe | 0,1% |
| Wasser | 78,0% |

Zur Herstellung werden Öl und Wasser zusammen abgewogen, die Trockenstoffe werden eingemischt und dann kräftig eingerührt und im Anschluß alles zusammen emulgiert.

Die in der vorstehenden Beschreibung und in den Ansprüchen offenbarten Merkmale der Erfindung können sowohl einzeln als auch in jeder beliebigen Kombination für die Verwirklichung der Erfindung in ihren verschiedenen Ausführungsformen wesentlich sein.

## Patentansprüche

1. Mischung aus zumindest einer mit n-Octenylsuccinatanhydrid behandelten Hülsenfrucht-Stärke und zumindest einer modifizierten Stärke anderen Ursprungs, wobei in der Mischung die mit n-Octenylsuccinatanhydrid behandelte Hülsenfrucht-Stärke und die modifizierte Stärke anderen Ursprungs in einem Mischungsverhältnis von 70:30 bis 30:70 Gew.-% (auf Basis der gesamten Mischung) vorliegen.

2. Mischung nach Anspruch 1, wobei die mit n-Octenylsuccinatanhydrid behandelte Hülsenfrucht-Stärke eine verflüssigte Stärke ist.

3. Mischung nach Anspruch 1 oder 2, wobei die Hülsenfrucht-Stärke eine Erbsenstärke ist und/oder die modifizierte Stärke anderen Ursprungs eine verflüssigte und/oder stabilisierte Stärke ist.

4. Mischung nach einem der vorangehenden Ansprüche, wobei die Stärke anderen Ursprungs Kartoffelstärke und/oder Tapiokastärke umfasst.

5. Mischung nach einem der vorangehenden Ansprüche, wobei zumindest eine der Stärken getrocknet, sprühgekocht und/oder vorverkleistert ist.

6. Mischung nach einem der vorangehenden Ansprüche, wobei zumindest eine der Stärken über Sprühtrocknung hergestellt worden ist.

7. Mischung nach einem der vorangehenden Ansprüche, wobei zumindest eine der Stärken dextriniert ist.

8. Verwendung der Mischung nach einem der Ansprüche 1 bis 7 zur Herstellung von Feinkost, Süßwaren oder in der Getränkeindustrie.

9. Gelatinisierte Süßigkeit, wobei sie die Mischung nach einem der Ansprüche 1 bis 7 und ein oder mehrere Süßungsmittel enthält.

10. Feinkost oder Getränk, die bzw. das die Mischung nach einem der Ansprüche 1 bis 7 enthält.

## Claims

1. Mixture of at least one leguminous starch treated with n-octenyl succinate anhydride and at least one modified starch from other sources, wherein the leguminous starch treated with n-octenyl succinate anhydride and the modified starch from other sources are present in the mixture in a weight ratio of 70:30 to 30:70 per cent (on the basis of the entire mixture).

2. Mixture according to claim 1, wherein the leguminous starch treated with n-octenyl succinate anhydride is a liquefied starch.

3. Mixture according to claim 1 or 2, wherein the leguminous starch is a pea starch and/or the modified starch from other sources is a liquefied and/or stabilised starch.

4. Mixture according to one of the preceding claims, wherein the starch from other sources comprises potato starch and/or tapioca starch.

5. Mixture according to one of the preceding claims, wherein at least one of the starches is dried, spray cooked and/or pregelatinised.

6. Mixture according to one of the preceding claims, wherein at least one of the starches has been produced by means of spray drying.

7. Mixture according to one of the preceding claims, wherein at least one of the starches is dextrinated.

8. Use of the mixture according to one of the claims 1 to 7 for the production of fine food, confectionery or in the beverage industry.

9. Gelatinised confectionery, wherein it contains the mixture according to one of the claims 1 to 7 and one or more sweeteners.

10. Fine food, or drink, which contains the mixture according to one of the claims 1 to 7.

## Revendications

1. Mélange d'au moins un amidon de légumineuse traité avec de l'anhydride N-octényl-succinique et d'au moins un amidon modifié d'une origine différente, où dans le mélange, l'amidon de légumineuse traité avec l'anhydride N-octényl-succinique et l'amidon modifié d'origine différente se présentent dans un rapport de mélange de 70 : 30 à 30 : 70 en % de poids (sur la base du mélange total).

2. Mélange selon la revendication 1 où l'amidon de légumineuse traité avec de l'anhydride N-octényl-succinique est un amidon liquéfié.

3. Mélange selon les revendications 1 ou 2 où l'amidon de légumineuse est un amidon de pois et/ou l'amidon modifié d'origine différente est un amidon liquéfié et/ou stabilisé.

4. Mélange selon l'une des revendications précédentes où l'amidon d'origine différente comprend de l'amidon de pomme de terre et/ou de l'amidon de tapioca.

5. Mélange selon l'une des revendications précédentes où au moins l'un des amidons est séché, pulvérisé par la cuisson et/ou prégélifié.

6. Mélange selon l'une des revendications précédentes où au moins l'un des amidons a été fabriqué par l'intermédiaire d'un séchage par pulvérisation.

7. Mélange selon l'une des revendications précédentes où au moins l'un des amidons est dextrinisé.

8. Utilisation du mélange selon l'une des revendications de 1 à7 pour la fabrication de produits d'épicerie fine, de confiseries ou dans l'industrie des boissons.

9. Confiserie gélatinisée contenant le mélange selon l'une des revendications de 1 à 7 et un ou plusieurs produits édulcorants.

10. Produit d'épicerie fine ou pour des boissons qui contient respectivement le mélange selon l'une des revendications de 1 à 7.
